# EUROPEAN PATENT APPLICATION

(11) **EP 2 360 766 A2**
(43) Date of publication of application: **24.08.2011**
(21) Application number: 10166676.6
(22) Date of filing: 21.06.2010
(51) Int. Cl.: H01M 8/04, H01M 8/24, H01M 16/00

(54) **Parallel Fuel Cell Electrical Power System**

(30) Priority: 12.02.2010 TW 099104594
(71) Applicant: Chung-Hsin Electric and Machinery Manufacturing Corp., Taipei County (TW)
(72) Inventor: Wu, Yi-Fan, 33383, Kwei Shan Township (TW); Chen, Yen-Yu, 33383, Kwei Shan Township (TW); Wu, Chi-Bin, 33383, Kwei Shan Township (TW)
(74) Representative: Ihle, Kornelia

(57) **Abstract**

A parallel fuel cell electrical power system (100) is provided. The parallel fuel cell electrical power system (100) includes a plurality of fuel cell electrical power modules (2) and a direct-current bus (DC bus) (3). Each of the fuel cell electrical power modules (2) has a fuel-cell stack (20), a current switch (21), and a reverse current protection element (22). The DC bus (3) electrically connects the output end of the plurality of fuel cell electrical power modules (2) and makes one fuel cell electrical power module (2) electrically connect to another fuel cell electrical power module (2) in parallel, such that the fuel-cell stacks (20) with a fixed power capacity are combined to effectively output a variety of voltages for a load.

## Description

### Field of the Invention

The present invention relates to parallel fuel cell electrical power systems, and more particularly, to a parallel fuel cell electrical power system whereby fuel-cell stacks with a fixed power capacity are combined to output a variety of power capacity.

### Background of the Invention

Fuel cells embody a pollution-free green electric power generation technology. The electric power generation technology, which is based on electrochemical principles, provides a device for converting the chemical energy contained in a fuel into electrical energy directly and releasing thermal energy.

A fuel cell is an electrochemical device whereby oxidizing agents and fuels in the form of a proton source undergo an electrochemical reaction so as to generate electrical current and produce water. The commonest fuel for fuel cells is hydrogen gas, and the commonest oxidizing agent for fuel cells is oxygen gas. In general, a fuel and an oxidizing agent are delivered in the form of a gaseous flow to fuel cells. In practice, a fuel is fed to an anode area of a fuel cell, and an oxidizing agent is fed to a cathode area of the fuel cell. The anode chamber and the cathode chamber are separated from each other by an electrically insulating membrane which is ion-permeable. Selection of the electrically insulating membrane is carried out according to the appropriate characteristics thereof as well as the conditions for operation and design of the fuel cell.

Two or more fuel cells are connected together so as to generate more electrical current than that produced by a single fuel cell. In general, plural fuel cells thus collectively connected are known as a fuel-cell stack. Normally, a fuel-cell stack comprises fuel cells which are connected in series. Furthermore, a fuel-cell stack can be integrated into a fuel cell system. The fuel cell system usually comprises hydrogen gas or another fuel source for use with the fuel-cell stack. In general, the fuel cell system also comprises other components conducive to conversion of a fuel and an oxidizing agent into electrical power.

Fuel-cell stacks are usually comprised of a fixed output power capacity, which causes difficulty in usage when different ranges of power capacity are required. In view of this, it is imperative to efficiently combine fuel-cell stacks with a fixed power capacity so as to output a variety of voltage of different output power capacity.

### Summary of the Invention

The present invention relates to a parallel fuel cell electrical power system which comprises a plurality of fuel cell electrical power modules connected in parallel, such that fuel-cell stacks with a fixed power capacity are combined to output a variety of power capacity.

The present invention relates to a parallel fuel cell electrical power system which enables each of the fuel-cell stacks to output balanced electrical power, by equalizing the flow rate of the fuel (hydrogen gas) fed to the fuel-cell stacks and equalizing the flow rate of the air fed to the fuel-cell stacks controllably.

The present invention relates to a parallel fuel cell electrical power system effective in supplying electrical power and extending the service life of the fuel cells, by providing equal reactant pressure and concentration.

The present invention relates to a parallel fuel cell electrical power system with a current switch and a reverse current protection element for protecting the fuel-cell stacks and thereby preventing damage from being done to the fuel-cell stacks due to differences therebetween.

To achieve the above and other objectives, the present invention provides a parallel fuel cell electrical power system comprising: a plurality of fuel cell electrical power modules sharing a fuel feed line, the fuel cell electrical power modules each comprising: a fuel-cell stack having a cathode input end connected to an air pump; a current switch series-connected to the output end of the fuel-cell stack; and a reverse current protection element having unidirectional electrical connection with and being series-connected to an output end of the current switch; and a direct-current bus (DC bus) electrically connected to output ends of the fuel cell electrical power modules, thereby allowing the fuel cell electrical power modules to be connected in parallel.

Implementation of the present invention at least involves the following inventive steps:
1. Fuel-cell stacks are usually of a fixed output power capacity, which causes difficulty in usage when different ranges of power capacity are required. The fuel-cell stacks with a fixed power capacity can be combined to output a variety of power capacity due to the design of the parallel fuel cell electrical power system.
2. Equalizing the flow rate of the fuel (hydrogen gas) fed to the fuel-cell stacks and equalizing the flow rate of the air fed to the fuel-cell stacks enable each of the fuel-cell stacks to output balanced electrical power.
3. The parallel fuel cell electrical power system is effective in supplying electrical power and extending the service life of the fuel cells due to the provision of equal reactant pressure and concentration.

### Brief Description of the Drawings

A detailed description of further features and advantages of the present invention is given below so that a person skilled in the art can understand and implement the technical contents of the present invention and readily comprehend the objectives and advantages thereof by reviewing the disclosure of the present specification and the appended claims in conjunction with the accompanying drawings, in which:
Fig. 1 is a schematic view of a first embodiment of the framework of a parallel fuel cell electrical power system according to the present invention;
Fig. 2 is a flow chart regarding a first embodiment of operation of a controller of a parallel fuel cell electrical power system according to the present invention;
Fig. 3 is a schematic view of a second embodiment of the framework of a parallel fuel cell electrical power system according to the present invention;
Fig. 4 is a flow chart regarding a second embodiment of operation of a controller of a parallel fuel cell electrical power system according to the present invention; and
Fig. 5 is a schematic view of a third embodiment of the framework of a parallel fuel cell electrical power system according to the present invention.

### Detailed Description of the Invention

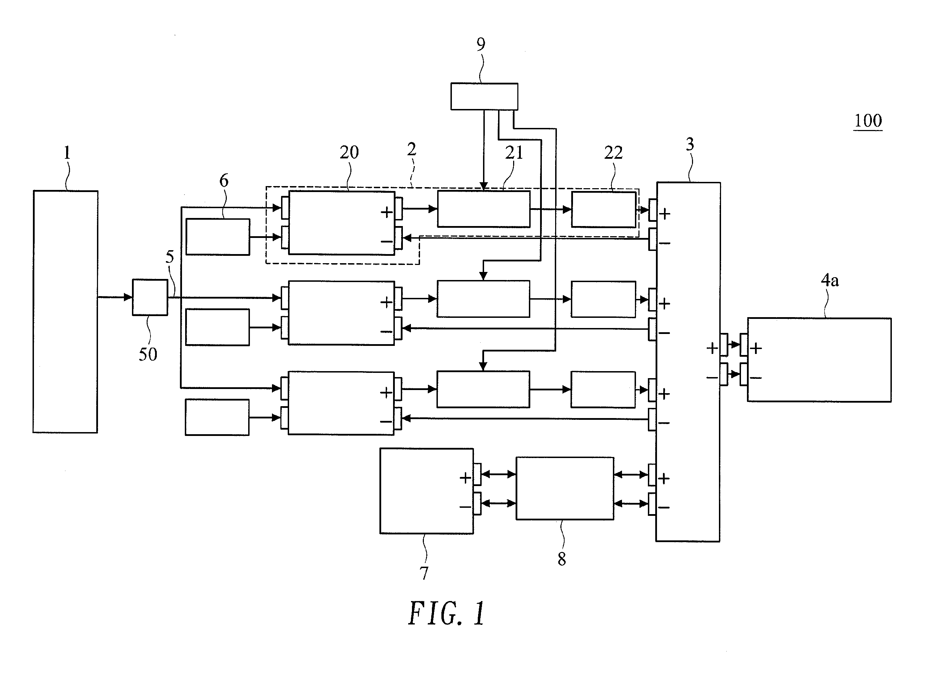

Please refer to Fig. 1 for a first embodiment of a parallel fuel cell electrical power system 100 which includes a fuel supplying device 1, a plurality of fuel cell electrical power modules 2, a direct-current bus (DC bus) 3, and a power conditioner 4a.

The fuel supplying device 1 can be a high-pressure hydrogen cylinder which produces hydrogen gas by means of a reformer. The produced hydrogen gas functions as a fuel to be supplied to the fuel cell electrical power modules 2.

As shown in Fig. 1, the plurality of fuel cell electrical power modules 2 share a common fuel feed line 5. Each of the fuel cell electrical power modules 2 includes a fuel-cell stack 20, a current switch 21, and a reverse current protection element 22, e.g. diode. The fuel cell electrical power modules 2 are arranged in parallel.

The fuel feed line 5 is provided with an electromagnetic valve 50. The electromagnetic valve 50 is connected to the fuel supplying device 1 and the fuel feed line 5. The electromagnetic valve 50 controls the feeding of the fuel to the plurality of fuel cell electrical power modules 2, so as to equalize the pressure of the fuel fed to the plurality of fuel cell electrical power modules 2.

The fuel-cell stack 20 has an anode input end connected to the fuel feed line 5, thereby allowing the hydrogen gas to be fed to the fuel-cell stack 20 via the fuel feed line 5. Also, the fuel-cell stack 20 has a cathode input end connected to an air pump 6. The air pump 6 supplies air (oxygen) to the cathode input end of the fuel-cell stacks 20. The flow rate of the supplied air (oxygen) is adjustable by the rotational speed of the air pump 6. In so doing, the supplied air (oxygen) caters for different output extent of the fuel-cell stacks 20. Furthermore, the air pump 6 controllably equalizes the flow rate of the air fed to each of the fuel-cell stacks 20, such that each of the fuel-cell stacks 20 output balanced electrical power. Preferably, the fuel-cell stacks 20 are air-cooled fuel-cell stacks or water-cooled fuel-cell stacks.

The current switch 21 is series-connected to the anode output end of a corresponding one of the fuel-cell stacks 20. The current switch 21 cuts off the linking circuit for the corresponding said the fuel-cell stack 20 as soon as the electrical power singly generated by the corresponding one of the fuel-cell stacks 20 exceeds an electrical current limit thereof. In so doing, the fuel-cell stacks 20 are prevented from outputting excessive electrical power to thereby eliminate the cause of unbalanced electrical power.

The reverse current protection element 22 is series-connected to and has unidirectional electrical connection with the output end of the current switch 21. Thereby, electrical current is prevented from returning to the fuel-cell stacks 20 to cause damage thereto. Preferably, the reverse current protection element 22 is a unidirectional electrical connection component or a diode.

The DC bus 3 is electrically connected to the output ends of the fuel cell electrical power modules 2 such that the fuel cell electrical power modules 2 are connected in parallel. The DC bus 3 collects the electrical power generated by the fuel-cell stacks 20.

The power conditioner 4a is series-connected to the output end of the DC bus 3. The power conditioner 4a transforms voltage and electrical power and adjusts the voltage of the DC bus 3. The adjusted voltage of the DC bus 3 is configured for a load.

As shown in Fig. 1, in the first embodiment, the parallel fuel cell electrical power system 100 further includes a battery 7. The battery 7 is electrically connected to the DC bus 3 via a two-way converter 8 and parallel-connected to the fuel cell electrical power modules 2. When normal electrical power is supplied by the fuel cell electrical power modules 2, the two-way converter 8 adjusts the voltage to levels applicable to the battery 7. Then, the battery 7 is recharged. Eventually, the battery 7 supplies electrical power required for the load and therefore maintains electrical power supply whenever the fuel-cell stacks 20 come to a halt or are disconnected.

As shown in Fig. 1, in the first embodiment, the parallel fuel cell electrical power system 100 further includes a controller 9 connected to the current switch 21. The controller 9 reads a status signal of each of the fuel-cell stacks 20 and controllably switches on/off a corresponding one of the current switches 21.

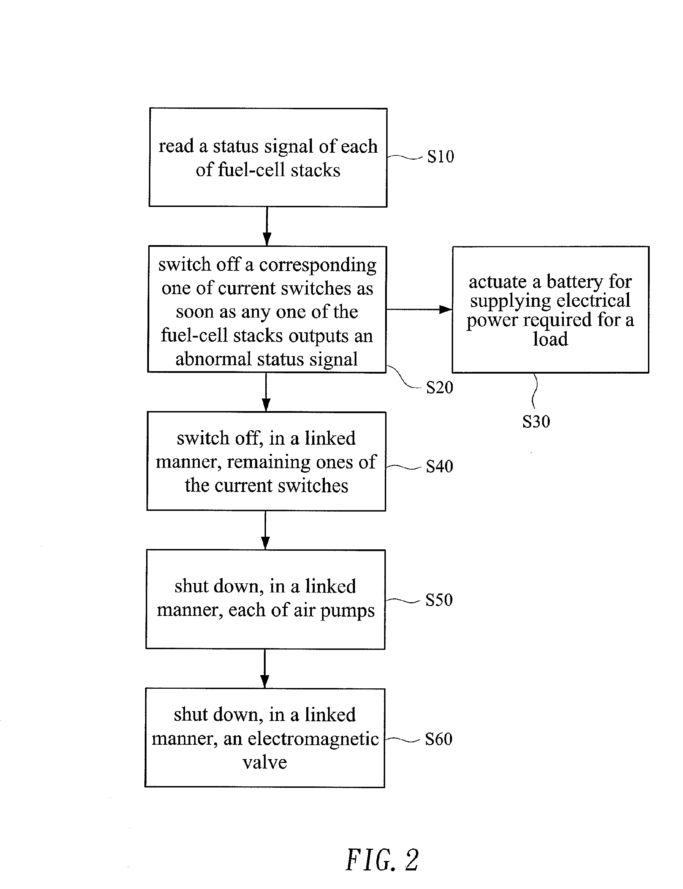

Referring to Fig. 2, the controller 9 operates in the following manner. In step S 10, the controller 9 reads a status signal of each of the fuel-cell stacks 20. In step S20, the controller 9 switches off a corresponding one of the current switches 21 upon detection of an abnormal status signal generated as a result of excessive electrical power output by any one of the fuel-cell stacks 20. In step S30, the controller 9 actuates the battery 7 such that the battery 7 supplies the electrical power required for the load.

Alternatively, the step S20 can be followed by step S40, step S50, and step S60 as shown in Fig. 2. In the step S40, when an abnormal status signal from any one of the fuel-cell stacks 20 is outputted, the controller 9 then switches off, in a linked manner, the current switches 21 that correspond in position to fuel-cell stacks 20, so as to prevent the load from draining the electrical power from the fuel cell electrical power modules 2. Next, in the step S50, the controller 9 shuts down, in a linked manner, each of the air pumps 6 so as to stop the air supply. In the step S60, the controller 9 shuts down, in a linked manner, the electromagnetic valve 50 so as to stop the hydrogen gas supply.

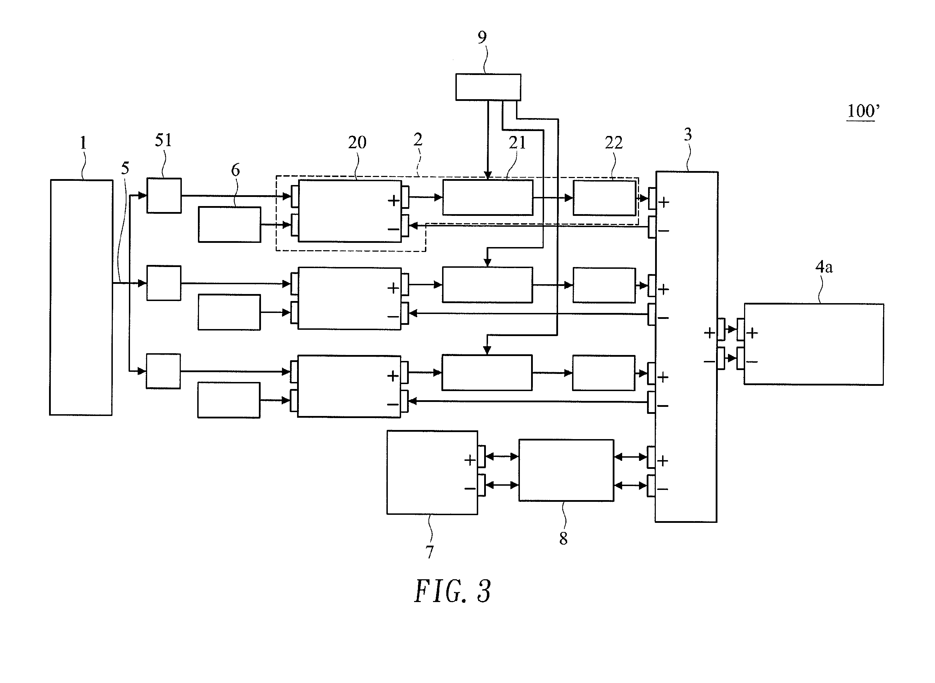

Please refer to Fig. 3 for a second embodiment of a parallel fuel cell electrical power system 100' which includes a fuel supplying device 1, a plurality of fuel cell electrical power modules 2, a direct-current bus (DC bus) 3, a power conditioner 4a, a battery 7, and a controller 9. The second embodiment is substantively the same as the first embodiment in terms of the structure and operation of the fuel supplying device 1, the plurality of fuel cell electrical power modules 2, the direct-current bus (DC bus) 3, the power conditioner 4a, the battery 7, and the controller 9. Hence, only the differences between the first embodiment and the second embodiment are described below for the sake of brevity.

As shown in Fig. 3, the second embodiment differs from the first embodiment in the following manner. First, a plurality of flow controllers 51 in the second embodiment substitute for the electromagnetic valve 50 in the first embodiment. Second, each of the flow controllers 51 communicates with the fuel feed line 5. Third, the flow controllers 51 correspond in position to the anode input ends of the fuel-cell stacks 20, respectively. Fourth, the flow controllers 51 control the flow rate of the fuel fed to the plurality of fuel cell electrical power modules 2 so as to equalize the flow rate of the fuel fed to the plurality of fuel cell electrical power modules 2, thereby balancing the electrical power outputted by each of the fuel-cell stacks 20.

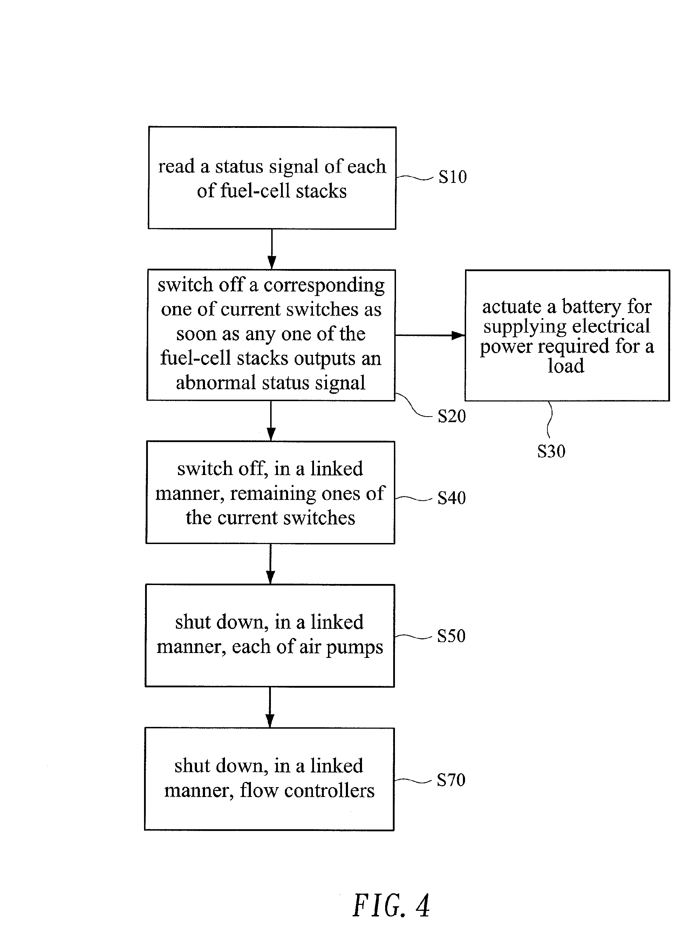

Please refer to Fig. 4 for a flow chart regarding a second embodiment of operation of a controller of a parallel fuel cell electrical power system according to the present invention. The second embodiment is substantively the same as the first embodiment in terms of the operation of the controller 9. Hence, only the differences between the first embodiment and the second embodiment are described below for the sake of brevity.

As shown in Fig. 4, step S50 is followed by step S70. In the step S70, the controller 9 shuts down, in a linked manner, the flow controllers 51 so as to stop the hydrogen gas supply.

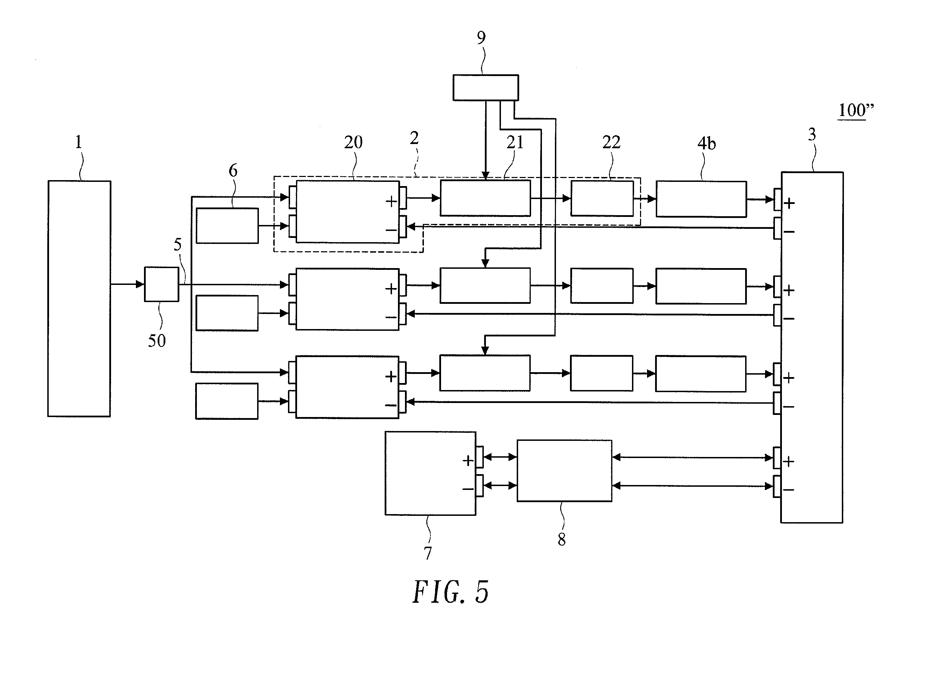

Please refer to Fig. 5 for a third embodiment of the framework of a parallel fuel cell electrical power system 100" according to the present invention. The parallel fuel cell electrical power system 100" comprises a fuel supplying device 1, a plurality of fuel cell electrical power modules 2, a direct-current bus (DC bus) 3, a power conditioner 4b, a battery 7, and a controller 9. The third embodiment is substantively the same as the first embodiment in terms of the structure and operation of the fuel supplying device 1, the plurality of fuel cell electrical power modules 2, the direct-current bus (DC bus) 3, the battery 7, and the controller 9. Hence, only the differences between the first embodiment and the third embodiment are described below for the sake of brevity.

As shown in Fig. 5, the third embodiment differs from the first embodiment in the following manner. First, in the third embodiment, the output ends of the fuel cell electrical power modules 2 are series-connected to power conditioners 4b, respectively. Second, the electrical power generated by the fuel-cell stacks 20 passes through the current switch 21 and the reverse current protection element 22 before entering the power conditioners 4b. Third, the power conditioners 4b adjust the electrical power until the electrical power is equalized. Fourth, the equalized electrical power is collected by the DC bus 3 for the load.

In conclusion, a parallel fuel cell electrical power system includes a plurality of fuel cell electrical power modules connected in parallel. The fuel cell electrical power modules each include a fuel-cell stack with a fixed power capacity. The fuel-cell stacks are combined to output voltages of different power capacity for the load. The parallel fuel cell electrical power system enables the fuel-cell stacks to output balanced electrical power, by equalizing the flow rate of the fuel (hydrogen gas) fed to the fuel-cell stacks and equalizing the flow rate of the air fed to the fuel-cell stacks controllably. Moreover, the parallel fuel cell electrical power system is effective in supplying electrical power and extending the service life of the fuel cells, by providing equal reactant pressure and concentration.

The foregoing embodiments are provided to illustrate and disclose the technical features of the present invention so as to enable persons skilled in the art to understand the disclosure of the present invention and implement the present invention accordingly, and are not intended to be restrictive of the scope of the present invention. Hence, all equivalent modifications and variations made to the foregoing embodiments without departing from the spirit and principles in the disclosure of the present invention should fall within the scope of the invention as set forth in the appended claims.

## Claims

1. A parallel fuel cell electrical power system (100) comprising:
a plurality of fuel cell electrical power modules (2) sharing a fuel feed line (5),
the fuel cell electrical power modules (2) each comprising:
a fuel-cell stack (20) having a cathode input end connected to an air pump (6);
a current switch (21) series-connected to the output end of the fuel-cell stack (20); and
a reverse current protection element (22) having unidirectional electrical
connection with and being series-connected to an output end of the current switch (21); and
a direct-current bus (DC bus) (3) electrically connected to output ends of the
fuel cell electrical power modules (2), thereby allowing the fuel cell electrical power modules (2) to be connected in parallel.

2. The parallel fuel cell electrical power system (100) of claim 1, wherein the reverse current protection element (22) is a unidirectional electrical connection component or a diode.

3. The parallel fuel cell electrical power system (100) of claim 1, further comprising a power conditioner (4a) series-connected to an output end of the DC bus (3).

4. The parallel fuel cell electrical power system (100) of claim 1, further comprising a battery (7) electrically connected to the DC bus (3) via a two-way converter (8) and parallel-connected to the fuel cell electrical power modules (2).

5. The parallel fuel cell electrical power system (100) of claim 1, further comprising a controller (9) for reading a status signal of each of the fuel-cell stacks (20) and controllably switching on/off a corresponding one of the current switches

6. The parallel fuel cell electrical power system (100) of claim 5, wherein the controller (9) is configured to perform the steps of:
reading the status signal of each of the fuel-cell stacks (20);
switching off a corresponding said current switch (21) as soon as any said
fuel-cell stack (20) outputs an abnormal said status signal; and
actuating a battery (7) electrically connected to the DC bus (3) via a two-way
converter (8) and parallel-connected to the fuel cell electrical power modules (2).

7. The parallel fuel cell electrical power system (100) of claim 6, wherein the controller (9) further performs the steps of:
switching off, in a linked manner, the current switches (21) corresponding in
position to said fuel-cell stacks (20) when an abnormal status signal from any said fuel-cell stack (20)is outputted; and
shutting down, in a linked manner, each said air pump (6).

8. The parallel fuel cell electrical power system (100) of claim 7, wherein the fuel feed line (5) is provided with an electromagnetic valve (50), such that the step of shutting down, in a linked manner, each said air pump (6) by the controller (9) is followed by the step of shutting down, in a linked manner, the electromagnetic valve (50) by the controller (9).

9. The parallel fuel cell electrical power system (100') of claim 7, wherein the fuel feed line (5) is provided with a plurality of flow controllers (51) corresponding in position to anode input ends of the fuel-cell stacks (20), respectively, and the step of shutting down, in a linked manner, each said air pump (6) by the controller (9) is followed by the step of shutting down, in a linked manner, the flow controllers (51) by the controller (9).

10. The parallel fuel cell electrical power system (100") of claim 1, further comprising a plurality of power conditioners (4b) series-connected to the output ends of the fuel cell electrical power modules (2), respectively.
